# EUROPEAN PATENT SPECIFICATION

(11) **EP 2 490 053 B1**
(45) Date of publication and mention of the grant of the patent: **03.05.2017**
(21) Application number: 12154313.6
(22) Date of filing: 07.02.2012
(51) Int. Cl.: G02B 6/245

(54) **Device for removing a coating from an optical fiber using heated clamps**
Vorrichtung zum Entfernen einer Beschichtung von einer optischen Faser mittels erhitzter Klammern
Dispositif de retrait d'un revêtement d'une fibre optique utilisant des pinces chauffées

(30) Priority: 17.02.2011 US 201161443942 P
(43) Date of publication of application: 22.08.2012
(73) Proprietor: CommScope Connectivity Belgium BVBA, 3010 Kessel-Lo (BE)
(72) Inventor: Hilderink, André Johannes Maria, 7481 CE Haaksbergen (NL); Jacobs, Hernes, 7596 LZ Rossum (NL); Krechting, Petrus Theodorus, 7532 AJ Enschede (NL); Rutgers, Petrus Theodorus, 7556 BW Hengelo (NL); Wolbers, Martijn Johannes, 7558 HE Hengelo (NL); Van Der Pol, Henk Jan Theodor, 7553 DW Hengelo (NL)
(74) Representative: Patentanwälte Bressel und Partner mbB

(56) References cited:
- EP-A2- 0 899 594
- DE-A1-102007 001 707
- JP-A- 6 265 733

## Description

### Technical field

The present invention relates to a device for removing one or more coatings from an optical fiber.

### Technical background

Modern optical devices and optical communications systems widely use fiber optic cables. Optical fibers are strands of glass fiber processed so that light beams transmitted through the glass fiber are subject to total internal reflection wherein a large fraction of the incident intensity of light directed into the fiber is received at the other end of the fiber.

Optical fibers are usually coated with one or more protective coatings, for example a polymer coating made of acrylate or polyimide, in order to protect the surface of the fiber from chemical or mechanical damage. In order to prepare the fibers to be cleaved and spliced, or in order to further process the fibers to manufacture optical devices such as optical sensors and other optical communications network components, it is necessary to remove the protective coating or coatings, a process known as stripping, and to clean the optical fiber by removing any remaining coating debris.

Conventional stripping methods include mechanical stripping, chemical stripping, and thermal stripping. Mechanical stripping typically involves a stripping tool, similar to a wire stripper, which cuts through the coating and scrapes it off. Mechanicalstripping may result in nicks or scratches on the glass fiber surface, which could lead to cracks and degradation in the tensile strength of the fiber. Chemical stripping uses solvents or concentrated acids to remove the polymer coating. Chemical stripping is typically very costly, presents safety concerns due to the nature of the chemieals that are used, and, in some cases, may adversely affect the splice strength.

In addition to mechanical and chemical stripping, thermal stripping can be applied for which heating elements are used in order to remove the protective coatings of the fiber more easily. Patent application JP2010008852 discloses a device for thermally removing the coating of an optical fiber. The device comprises a heating part which heats the coating of the optical fiber by hat air produced between the heating element and the fiber, blade members which cut in the coating of the fiber, and means for holding the optical fiber in the vicinity of the heating element, for instance by using handling parts. In addition the first handling part is provided with an adsorbing member that adsorbs the coating part removed from the optical fiber using the blade members. Unfortunately, this stripping method may result in damage to the brittle glass element of the optical fiber.

JP2001108836A discloses a device for removing the coating from an optical fiber, using a foil type heater. A heater protection plate is provided above the foil type heater.

The JP 6 265 733 A discloses a device for removing a coating from a coated optical fiber. The coated optical fiber has a cladding, a core and an axis, the cladding surrounding the core and the coating surrounding the cladding. The device comprises means for heating and clamping said coated optical fiber. The coating is eliminated with blades by holding the core of the optical fiber between the means for heating and clamping, heating the core and extracting the optical fiber. Since the optical fiber hold between the clamping means, is pressed by providing a muscle shape pressing projection part at the clamping means on one side, the displacement of the coating is suppressed when the optical fiber is extracted. Therefore, it is possible to prevent the core from being abutted with the blades due to the displacement of the optical fiber.

### Summary of the invention

A need still exists for an improved device for removing coatings from an optical fiber.

It is an object of the present invention to provide an alternative device for automatically removing one or more coatings from an optical fiber.

This object is met by the means according to the independent claim of the present invention. The dependent claims relate to preferred embodiments.

The invention provides devices for removing a coating from a coated optical fiber, the coated optical fiber having a cladding, a core and an axis, the cladding surrounding the core and the coating surrounding the cladding, the device comprising means for heating the coated optical fiber while clamping the coated optical fiber, driving means for driving protective means to cover the coated optical fiber and be adapted for being inserted between the coated optical fiber and the means for heating thus said protective means preventing said heating and clamping means from contacting the coated optical fiber, and moving means for performing a relative movement, in an axial or perpendicular direction of the optical fiber axis, of the means for heating with respect to the cladding while the means for heating are clamping the coated optical fiber and while the protective means, which covers the coated optical fiber, is inserted between the coated optical fiber and the means for heating, thus removing the coating from the coated optical fiber. The protective means are adapted to adhere said coating.

The fiber tensile strength, can be an important parameter to consider when removing a coating from a coated optical fiber, because the higher a tensile strength of the stripped fiber, the stronger the fiber is and hence the better quality of the resulting fiber. Another parameter which can thus be of importance is the speed of the relative movement of the fiber as it is being moved while stripping. With respect to fiber strength preferably the relative movement has a speed in the range of 10 to 20 mm/s. This relatively high speed can have a beneficial influence in the surface generated glass defects.

Preferably the device further comprises means for inserting an incision in the coating of the optical fiber. The means for making an incision in the coating of the optical fiber can for instance be a knife with a profiled blade or a heated protruding element or a profiled heated blade.

In embodiments, the driving means for driving the protective means to cover the coated optical fiber further can be adapted for being inserted between the coated optical fiber and the heating means and/or the means for making an incision in the optical fiber. Preferably both the heating means and the means for making an incision in the optical fiber are protected from the coated optical fiber. In other embodiments the means for making an incision in the coating of the optical fiber can be retractable. As a result, the optical fiber is stripped by performing a relative movement of the means for heating with respect to the cladding while the means for heating are clamping the coated optical fiber.

In alternative embodiments, wherein the means for making an incision is not retractable, the optical fiber is stripped by performing a relative movement of the means for making an incision with respect to the optical fiber while the means for making an incision are clamping the coated optical fiber. As a result the means for making an incision scrapes the coating of the coated optical fiber. Preferably, the coated optical fiber is heated by the heating means before performing the relative movement.

In other embodiments, the device further comprises cleaning means for cleaning a stripped portion of said optical fiber, whereby said cleaning means can be retractable or pivotable. Preferably, the stripped portion of the optical fiber is cleaned by performing a relative movement of the cleaning means with respect to the stripped optical fiber while the means for heating or the means for making an incision are clamping the coated optical fiber and the means for cleaning are clamping the stripped portion of the optical fiber.

The means to protect the optical fiber processing tools, e.g. stripping clamps, knives, heated profiled blades, cleaning means, etc. or protective means prevent at least some of the optical fiber processing tools from directly contacting the coating of the optical fiber. In this way, contamination of the optical fiber processing tools by residues of the coating is avoided. In a preferred embodiment, a tape is used as protective means. In case two optical fiber processing tools are used on each side of the optical fiber, for instance if two stripping clamps are used, a single or optionally two tapes may be used, each stripping clamp being protected by a tape. In another embodiment, a single tape is used, wrapped around the fiber when it is inserted between the clamps, so that it protects both stripping clamps. In the remainder of this description, mostly the term tape will be used as means to protect the stripping clamps. It is however to be understood that instead of tape other kinds of protective means may be used as well. Another kind of protective means can be a thin-walled plastic tube element. The tube element may be placed between the clamps and surrounding the optical fiber and is allowed to move along the fiber together with the stripping device. In this way the clamps are not contaminated and the tube can be used to capture and evacuate the stripped coating of the fiber. Preferably, for every stripping step a new tube is used.

Advantageously the stripping clamp, which may e.g. comprise a flat plate, can open symmetrically to facilitate the entry of the fiber between the clamps, and in addition a guiding means can be provided. Especially, the guiding means can be provided for guiding the fiber end in the stripping clamps in such way that no contact between the fiber end and the tape is established.

The device then preferably operates as follows. The coated optical fiber is clamped and heated while the heated plates are protected by tape from making contact with the coated optical fiber. In a next step, the clamps are translated along the fiber axis away from the fixed clamps over a predefined distance and as a result the heated coating breaks at the border between the heated and the non-heated portions. It is then removed from the optical fiber by means of the friction force between the clamp and the coating. The captured coating of the optical fiber can optionally be evacuated by the tape, while the non-heated portion and the core and cladding are held in place. Preferably, before or while the coated optical fiber is clamped, an incision is made on the coating of the optical fiber at a predefined distance.
As a result the brittle glass element of the optical fiber has no chance to get damaged in any way and by using tape to protect the clamp from being contaminated by the heated coating, resulting in a higher life time of the device. In addition the debris resulting from the stripping is transported away. The latter results in a highly reliable device and enables the integration of the device in an automated tool which is able to apply additional processing steps to the optical fiber, such as: cleaving, cleaning, fiber end treatment, attaching a connector, inspecting a processed fiber, etc.

Another preferred embodiment of the present invention provides a device for removing a coating from a coated optical fiber, the coated optical fiber having a coating, the device comprising a clamp including two flat plates which can be heated, retractable means to make an incision and tape to protect the clamp and/or the means for making an incision. Advantageously the clamp can open symmetrically to facilitate the entry of the fiber into the clamp. The device then preferably operates as follows. The retractable knives are configured to make, next to the flat plates, an incision in the fiber, as far as the cladding. After performing this incision, the means can be retracted. The coated optical fiber is clamped between two flat plates and heated while the heated plates are protected from making contact with the coated optical fiber. Performing an incision may occur before or during the heating. The clamped coating of the optical fiber is then moved, while the non-heated portion and the core and cladding are held in place. The coating breaks at the location of the incision and is removed from the optical fiber by means of the friction force between the clamp and the coating. When the means for making an incision are not retracted, the coating of the optical fiber is clamped and heated. The means for making an incision scrapes the heated coating of the optical, while the non-heated portion and the core and cladding are held in place.

Before the fiber is entered in the stripping clamps, in another embodiment guiding means can be provided for guiding the fiber end in the stripping clamps in such way that no contact between the fiber end and tape is established. For instance by using movable clamps in between the fixed clamps and the stripping clamps.

After the fiber enters the stripping clamp, stripping of the fiber, using retractable means for making an incision, may be performed in four steps as follows. In a first step an incision can be made in the coating but not as far as the cladding, by for instance retractable knives or heated profiled blades or a heated protruding element and in a next step the clamps, which are protected from the fiber by tape, are heated, e.g. up to 120 °C, the clamps are then translated along the fiber axis away from the fixed clamps over a predefined distance and as a result the coating breaks at the location of the incision and is removed from the optical fiber by means of the friction force between the heated clamp and the coating. Especially, the heaters will exercise a uniform shear force on the fiber resulting in a large strip length. In a third step, no incision is made in the fiber by for instance the retractable knives, but the clamps and protective means are heated in order to strip the remaining primary coating of the fiber having a thickness between 200-300 µm. In an optional final step, again no incision is made but the clamps and tape are heated in order to strip any residues on the cladding.

After the fiber enters the stripping clamp, stripping of the fiber, using non-retractable means for making an incision, may be performed in four steps as follows. In a first step an incision can be made in the secondary coating but not as far as the cladding, by for instance knives or heated profiled blades and in a next step the clamps are heated, e.g. up to 120 °C. Both means for making an incision and heated clamps can be protected from the fiber by tape. The heated clamps transfer heat to the coating of the fiber, which is softened and weakened and as the means for making an incision, which are not retracted, are translated along the fiber axis away from the fixed clamps over a predefined distance, the means for making an incision scrape the softened coating from the location of the incision and is removed from the optical fiber by means of the friction force between the means for making an incision and the coating. The translation of the means for making an incision along the fiber peels the coating from the fiber and pushes it off the surface. Especially, the means for making an incision will exercise a uniform shear force on the fiber resulting in a large strip length. In a third step, no incision is made in the fiber, but the clamps and protective means can be heated in order to strip the remaining primary coating of the fiber having a thickness between 200-300 µm. In an optional final step, again no incision is made but the clamps and tape are heated in order to strip any residues on the cladding.

If the fiber has an outer and an inner coating, the outer coating might be removed in a first stripping step and the inner coating in a second stripping step. After the first stripping step, the stripping clamps are opened, preferably new protective means, e.g. new tape, is dispensed, and the stripping clamps move back to the position where they can heat the inner coating that is to be removed. The stripping clamps are closed, and are moved again to remove the inner coating. Finally, a third heating and moving step may be performed to remove any debris that might still be present on the cladding of the optical fiber, thus performing a cleaning operation on the stripped optical fiber.

The fiber may only have an inner coating. An example of this is the special case of a reinforced optical fiber that comprises Kevlar between the outer and the inner coating. In this case, the outer coating and the Kevlar layer may be removed in a pre-treatment step, possibly by another device. The inner coating is then removed in the first stripping step discussed above, while the last stripping step will then be an "empty" step. An advantage of this method is that different kinds of fibers are treated in the same way, so that the operator does not have to enter information in the stripping device on the kind of fiber.

Alternatively, the stripping device may comprise a sensor that detects the kind of fiber that is to be stripped.

As a result, any optical fiber having a primary or secondary coating or both can be stripped. In addition, the operator will not have to specify any settings of the stripping device resulting in stripping of the optical fiber independent of the person operating the device. The latter results in a higher work efficiency and facilitates the handling of the device.

Further, in one embodiment of the device, two different types of tape can be used, an adhesive tape and a non-adhesive tape. One side of the adhesive tape is sticky, while the other side is non-sticky. The sticky side faces the coated optical fiber. The stripping device comprises driving means for driving the tapes. After the coating is removed from the fiber, the removed coating is sandwiched between the adhesive tape and the non-adhesive tape, and transported away from the stripping clamps by the driving means. The tapes can further be used to evacuate any debris resulting from stripping the optical fiber. This is a very convenient way to evacuate the coating debris. It is also safe: no debris remains near the stripping clamps, where it could damage the device in operation. Advantageously, a tape cartridge can be used which may contain three rollers that can be driven: a roller with adhesive tape, a roller with non-adhesive tape and a roller that can wind up the sandwich of the adhesive and the non-adhesive tape.

However, when the fiber is inserted between two layers of tape, the point of the fiber end can be sharp and it can penetrate the tape instead of sliding over it or the fiber can be bended due to plastic deformation of the buffer prior to insertion in the tool. Advantageously, in another embodiment of the device, the fiber can be supported during insertion between the tapes by using a guiding element, such as a movable clamp. The movable clamp can give guidance to the fiber end and can move in between the fixed clamp and the stripping clamp.

### Definitions

The term "fiber" as used herein relates to a single optical transmission element having a core having e.g. a diameter in the range from 8 to 10 µm, e.g. of 8 µm, and a cladding with e.g. a diameter in the range from 124 to 126 µm, e.g. a diameter of 125 µm, wherein the core is the central, light-transmitting region of the fiber, and the cladding is the material surrounding the core to form a guiding structure for light propagation within the core. The dimensions may of course be different; for multimode fibers, a core diameter of 50 µm or of 62.5 µm is most common. The core and cladding can be coated with a primary coating usually comprising one or more organic or polymer layers surrounding the cladding to provide mechanical and environmental protection to the light-transmitting region. The primary coating may have a diameter ranging e.g. between 200 and 300 µm. The core, cladding and primary coating usually are coated with a secondary coating, a so-called "buffer", a protective polymer layer without optical properties applied over the primary coating. The buffer or secondary coating usually has a diameter ranging between 300-1100 µm, depending on the cable manufacturer.

If all the coatings are removed at the end of the fiber over a certain length, so that only the core and cladding remain bare, the end of the fiber is "bare" as this is called in this document.

The term "stripping" as used herein relates to removing a coating from the optical transmission element.

The terms "automatically", "automatic", "automated" relate to a system or a method without manual intervention. Such an automatic system self-activates or is executed under programmed or specified conditions and performs specified functions. Moreover the execution is performed in a manner essentially independent of external influence or control.

### Brief description of the drawings

Further features of the present invention will become apparent from the examples and figures, wherein:
Figs. 1 a and 1 b schematically illustrate the operation of an embodiment of a stripping device according to embodiments of the invention;
Fig. 2 schematically illustrates the operation of an embodiment of a stripping device according to embodiments of the invention;
Figs. 3a and 3b schematically illustrate a means for making an incision according to a preferred embodiment of the invention;
Figs. 4a and 4b respectively schematically illustrate a profiled stripping blade compared to a straight stripping blade according to embodiments of the invention.
Fig. 5 is a perspective view of an embodiment of a tape cartridge and a stripping device according to the invention.
Fig. 6a illustrates perpendicular tape transport and Fig. 6b axial tape transport according to embodiments of the invention;
Fig. 7a to 7e illustrate a stripping operation, with axial tape transport, according to an embodiment of the invention;

### Detailed description of preferred embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

In the drawings, like reference numerals indicate like features; and, a reference numeral appearing in more than one figure refers to the same element. The drawings and the following detailed descriptions show specific embodiments of the stripping device and tape cartridge.

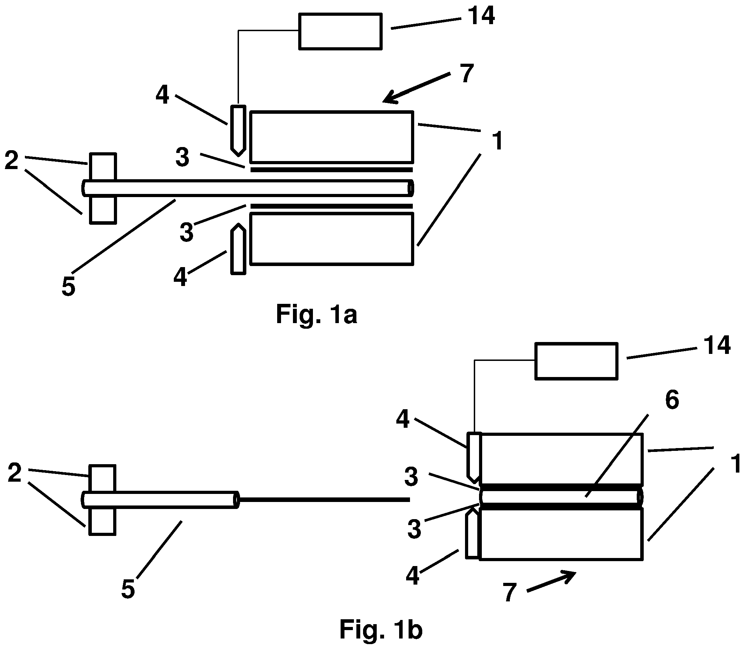

Figs. 1 a and 1 b schematically illustrate the operation of an embodiment of a stripping device 7 in accordance with the invention. Figs. 1 a and 1 b show side views of the stripping device 7, in two different positions. In Fig. 1 a, an optical fiber 5 is held by fixed clamps 2 and positioned between heated stripping clamps 1. The stripping clamps are closed, and clamp fiber 5. They are protected by protective means 3, so that they do not contact the coated fiber 5. The fixed clamps 2 may support the fiber 5 continuously throughout the stripping process. Before the fiber enters the stripping clamps 1, a movable clamp (not shown) may be provided to guide the fiber end between the stripping clamps 1 in such way that no contact between the fiber end and the tapes is established. Preferably, first an incision can be made in the coating but not as far as the cladding by means for making an incision, e.g. retractable knives or a heated protruding element or heated profiled blades 4. After making an incision the means for making an incision 4 can be retracted. The retraction can be controlled by an actuating moving means 14, such as a motor. The clamps are heated at a temperature between 100 and 120 °C of e.g. 120°C. The coating of the optical fiber 5 is thus heated, and weakened, preferably the heated plates and the retractable means for making an incision are protected at all times by the protective means 3. The making of an incision by for instance retractable knives 4 may occur before or during the heating. The stripping clamps 1 clamp the fiber 5 and protective means 3, gluing both tapes 3 together and capturing the coating. The stripping clamps 1 are moved relatively to the cladding of the optical fiber, by actuating moving means, such as a motor, comprised in the stripping device 7. In Fig. 1 b, the stripping clamps 1 are translated along the fiber axis away from the fixed clamps over a predefined distance. The coating is translated as well because of the frictional force between the coating and the protected stripping clamps, and as a result the coating breaks at the location between the heated and the non-heated portion. The captured coating 6 of the optical fiber is sandwiched between the protective means 3. The protective means 3 may be a tape, whereby the single tape may be guided around the optical fiber so that it forms a wrap, and that the captured coating 6 is caught between two portions of the single tape facing each other and forming a sandwich. In some embodiments two tapes can be used, each tape protecting a stripping clamp and a means for making an incision e.g. one adhesive tape and one non-adhesive tape, so that the sandwich may be evacuated and move the captured coating 6 away from the stripping clamps. Because of the protective means 3, the hot stripping clamps 1 and means for making an incision 4 are not contaminated by coating debris. An additional advantage is that this stripping process can easily be performed in an automated device, since coating debris is safely evacuated.

In some embodiments, the tape material preferably has high strength and good resistance to temperatures up to e.g. 220 °C. Further it preferably has a low coefficient of friction with respect to glass, preventing high clamping forces on the fiber after the stripping operation. A tape comprising of non-woven materials may be used, such as cellulose based materials.

Other materials used for a tape according to embodiments of the invention can for instance be Kapton tape, which is a polyimide film (poly[4,4'-oxydiphenylene-pyromellitimide]), and which can remain stable in a wide range of temperatures, from -273 to +400 °C. Also different other types of tape substrates can be used such as PET (polyethylene) which can be used at lower temperatures (up to 120 °C). In embodiments where profiled blades are used, tapes consisting of a woven textile material can be used. For instance two types that are commercially available can be used: (1) Optipop RS, which is the tape material used in the optical connector cleaner Optipop R1 produced by NTT AT, and (2) a woven textile tape material as used in ReelClean 500 optical fiber connector cleaner produced by Korean company TheFibers Inc.

In case of perpendicular tape transport, the tape may have a width of about 25 mm which is about the stripping length. The tape may also have markers which are used to wind the tape over the right distance and indicate the end of the tape. The tape may be carried in a cartridge that can be wider than the tape to accommodate debris protruding from the tape.

In addition, when using a single tape and/or second tape in some embodiments of the invention, to protect the fiber when using a heater, a tape comprising no sticky or adhesive zones can be used. The heat produced by the heater preferably generates the sticky behavior of the tape which helps the trapping of the debris. In an alternative embodiment, the tape can comprise zones with adhesives, whereby the adhesives become sticky after heat activation, thus the heat activated tape remains usually tack-free until it is activated by a heat source.

In other embodiments, the first or second tape may comprise zones which are embossed, whereby said embossed zones are adapted to cover perforated zones of the other tape. The embossed zone of the first or second tape and the perforated zone of the other tape are positioned such that a sandwich can be formed when both tapes are aiding the trapping of the debris.

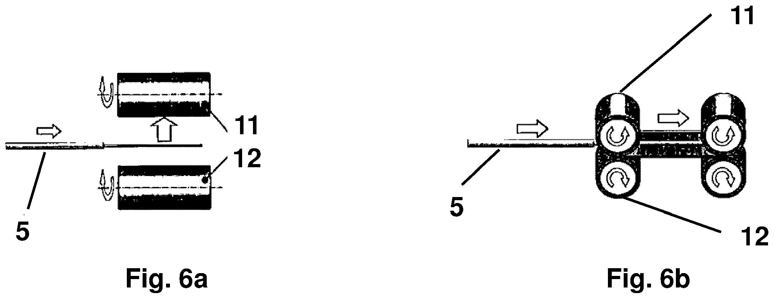

As protective means 3 two tapes may be used, each for one heated clamp. The two tapes may be of the same type, or of a different type. Alternatively, a single tape may be used that is wrapped around the fiber when it is inserted between the clamps, so that it protects both stripping clamps. The tape 3 may be driven between the stripping clamps in a direction perpendicular to the axis of the optical fiber, as shown in Fig. 6a. Alternatively, the tape 3 may be driven in a direction parallel to the axis of the fiber 4, as shown in Fig. 6b.

After evacuation of the stripped coating of the optical fiber 6, the stripped portion of the optical fiber can be guided back (not shown) and positioned between the stripping clamps 1, then the stripping clamps are closed, which clamp the fiber 5. Again, the clamps and knives are preferably both protected by protective means 3, so that they do not contact the stripped portion of the optical fiber. The fixed clamps 2 may support the fiber 5 continuously throughout the stripping process. The heating clamps are heated at a temperature of e.g. 120°C and any remaining debris on the stripped optical fiber 5 is thus heated, and weakened. The stripping clamps 1 are moved relatively to the stripped optical fiber, by actuating moving means, such as a motor, comprised in the stripping device 7. The stripping clamps 1 are translated along the fiber axis away from the fixed clamps over a predefined distance. The remaining debris on the stripped portion of the optical fiber is translated as well because of the frictional force between the coating and the protected stripping clamps, and as a result the remaining debris of the stripped fiber is captured and sandwiched between the protective means 3. As a result the stripped portion of the optical fiber is cleaned and the remaining debris can be safely evacuated in a next step. In this embodiment, the retractable knives preferably are not applied.

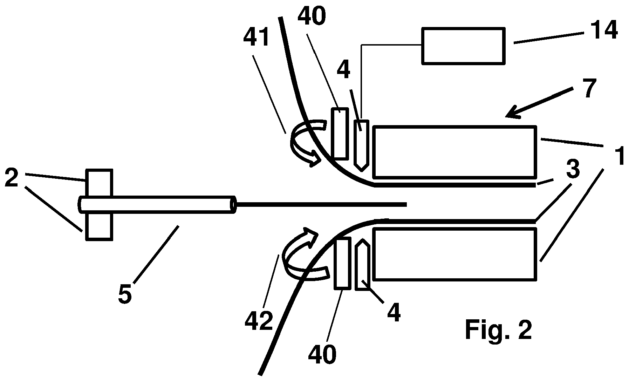

In another embodiment of the present invention schematically illustrated in Fig. 2, the a stripping device 7 further can comprise cleaning means 40 in accordance with embodiments of the invention. Before the stripping clamps 1 or means of making an incision 4 are translated along the fiber axis away from the fixed clamps over a predefined distance, the cleaning means 40 are pivoted in a direction, as illustrated by arrows 41, 42. When the stripping clamps or means for making in an incision 4 are translated along the optical fiber axis, the cleaning means which cover the stripped portion of the optical fiber clean the stripped portion of the optical fiber along the axis of the optical fiber. The cleaning means 40 slightly put pressure on the stripped portion of the optical fiber and as a result of the translating movement of the stripping clamps the stripped portion of the optical fiber is cleaned.

Each cleaning means preferably can comprise a container which can be filled with a cleaning liquid. The cleaning liquid preferably is functional and hazardless during the heating of the clamps or means for making an incision. Preferably a benzyl alcohol is used having a suitable flaming and/or boiling point. For instance benzyl alcohol, having a boiling temperature of 203-205°C, a flaming point of 98°C, an ignition temperature of 436°C can be used which is preferably non-toxic. Other examples can be improved formulations and mixtures based on benzyl alcohol such as for instance:
- 50% mixture of benzyl alcohol and TEGMBE (Triethylene glycol monobutyl ether) or
- a mixture of benzyl alcohol with 1% surfactant Byk333 (Polyether modified polydimethylsiloxane). Both additive substances are preferably chosen in order to improve cleaning performance by reducing the mixture's surface tension below that of the benzyl alcohol, in order to replicate the behavior of IPA (IsoPropyl Alcohol), but were also chosen such that the boiling point and flaming point would be comparable or higher to those of benzyl alcohol.

The cleaning means can be made of a rubber material such that the disposal of the cleaning liquid on the stripped fiber is performed in a controlled manner. One could also use a sponge material as cleaning means; however controlling the disposal or spreading of the cleaning liquid can be more difficult as compared to a rubber material. When translating the stripping clamps or means for making an incision along the fiber axis the stripped portion of the optical fiber is cleaned, preferably the protective means used in this embodiment can be a tape which is made of a textile material such that it can transfer the cleaning liquid to the stripped portion of the optical fiber in a most optimal way.

In other embodiments the cleaning means can be retractable in stead of pivotable, whereby the cleaning means are positioned on a stripped portion of the optical fiber, when the optical fiber is translated resulting in a cleaning of the stripped portion of the optical fiber. The retractable cleaning means can be controlled by an actuating moving means (not shown), such as a motor. After the cleaning operation the cleaning means can be retracted back to their original position. However, pivotable cleaning means are preferred as they advantageously take less space and result in a smaller stripping device.

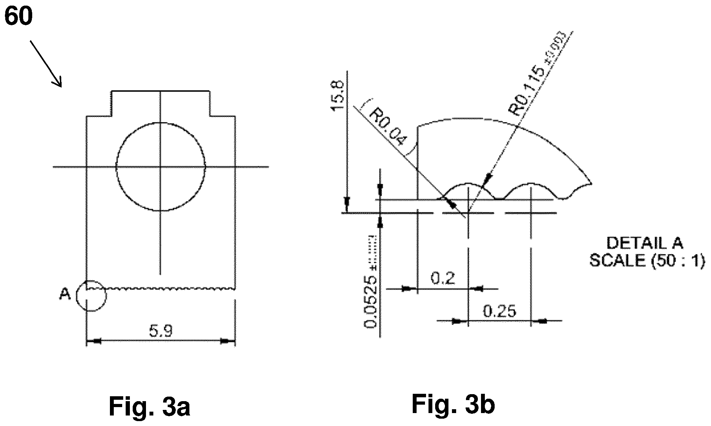

Fig. 3a schematically shows a means for making an incision, for instance a profiled blade according to another embodiment of the present invention. The profiled blade comprises an n edge profile whereby the surface profile is adapted to fit to a protective means over the coating or cladding of an optical fiber. The edge profile of the profiled blade 60 comprises arcuate grooves preferably semicircular stripping grooves repetitively positioned next to each other along a direction perpendicular to the fiber axis, having a period of 0.3mm, which have dimensions adapted to fit around an optical fiber, for instance having a radius of 0.0625 mm. The surface profile is shaped so that a free optical fiber end locates in one of the arcuate elements, i.e. is trapped thereby. Fig. 3b shows an enlarged view of detail A of the profiled surface blade.

The shape of the profiled blade is designed such that the larger radius portion of the curved edge matches the outer diameter of the bare fiber (i.e. 0.125mm) with a circular clearance around the fiber of i.e. 0.05mm to accommodate the cleaning means and/or the protective means (i.e. cleaning textile). When, two profiled blades are used, the resulting hole diameter is preferably such that it will cut enough into the coating but will not contact the cladding. This prevents the means for making an incision from damaging the glass fiber.

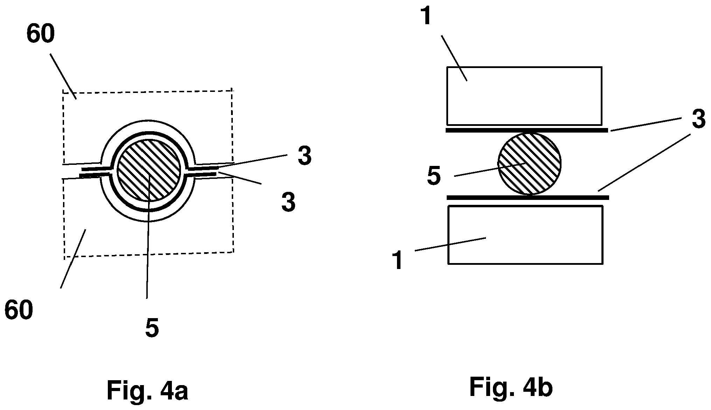

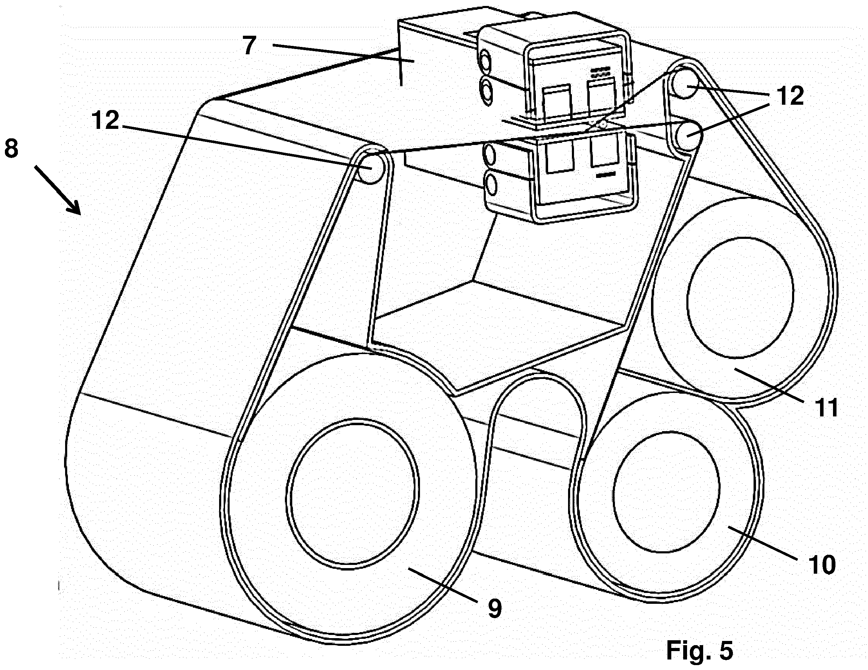

Fig. 4a and Fig. 4b schematically illustrate the advantage of using a profiled means for making an incision as compared to a straight means for making an incision. When using protective means, such as for instance a tape material 3, the profiled means for making an incision enables the protective means to cover a larger portion of the surface of the optical fiber 5. As a result, a larger portion of the coating of the optical fiber 5 is heated and weakened resulting in a more efficient heating of the coated optical fiber Fig. 5 shows a perspective view of a tape cartridge 8 and a stripping device 7 according to an embodiment of the invention. The tape cartridge 8 comprises driven rollers 12 that transport a first and/ or second protective mean(s) e.g. tape(s). It further comprises a roller with a tape 11, optionally a roller with another tape 10 and a roller 9 that winds up a tape 11 and optionally a second tape 10.

Instead of two heaters or two means for making an incision, more heaters or means for making an incision, or just a single heater or means for making an incision, may be provided. The guiding element or guiding elements is/are preferably adapted for guiding the protective means, for instance the tape, or tapes, to protect the heater(s) and optionally the means for making an incision from contacting the optical fiber. As discussed above, this prevents the heater(s) or means for making incision from being soiled by heated coating. The tape may thus have two functions: in evacuating the debris on the one hand, and protecting the heater(s) and optionally means for making an incision from contacting the optical fiber on the other hand.

Different orientations of a tape of optionally tapes are possible. The tapes 11, 12 may be guided in a direction perpendicular to the axis of the optical fiber 5, as shown in Fig. 5a. Alternatively, the tapes 11, 12 may be guided in a direction parallel to the axis of the optical fiber 5, as shown in Fig. 5b.

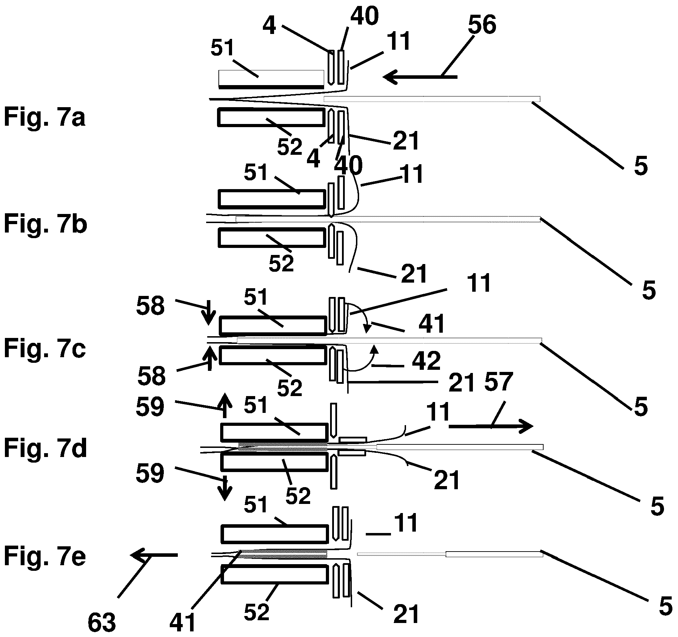

Figs. 7a to 7e schematically show an embodiment of a stripping operation in a direction parallel to the axis of the optical fiber, and the subsequent debris evacuation. In Fig. 7a, optical fiber 5 is inserted, in the direction of arrow 56, between the heaters 51 and 52 that are protected by tapes 11 and 12 (or by a single folded tape). Preferably the optical fiber 5 is inserted in between the heaters 51 and 52 over a distance of 10 to 70 cm. A first incision is performed on the optical fiber 5 preferably in the coating but not as far as the cladding by the means for making an incision 4, for instance retractable knives with profiled blades or heated profiled blades, as shown in Fig. 7b. After making an incision, the means for making an incision 4 can be retracted. In other embodiments, the means for making an incision can be non-retractable, i.e. after making an incision the means for making an incision remain in contact with the optical fiber. As a result, in when non-retractable means for making an incision are used, the clamps and the means for making an incision 4 are translated in a relative movement; the means for making an incision in addition scrape the heated and weakened coating from optical fiber. The making of an incision can thus be obtained mechanically or by heating the blades at a temperature of e.g. 200 °C. In embodiments where retractable means for making an incision are used, the retraction can be controlled by an actuating moving means (not shown), such as a motor. The heaters 51 and 52 are moved towards each other, in the direction of arrows 58, as shown in Fig. 7c, and the coating of the optical fiber is heated (Fig. 7c). The clamps are preferably heated at a temperature between 100 and 120 °C of e.g. 120°C whereas the retractable knives are heating at a temperature of e.g. 200 °C. Subsequently, the optical fiber is pulled out by suitable pulling means, in the direction of arrow 57. Before the translational movement, the cleaning means 40 are pivoted in a direction, as illustrated by arrows 41, 42, such that the cleaning means cover the stripped portion of the optical fiber along the axis while the optical fiber is pulled out the from the fixed clamps over a predefined distance as illustrated in Fig. 7d. The cleaning means 40 slightly put pressure on the stripped portion of the optical fiber and as a result of the translating movement of the stripping clamps the stripped portion of the optical fiber is cleaned. The stripped-off coating is left as debris 41 between the tapes (or tape) as illustrated in Fig. 7e. Instead of pulling the optical fiber out, the heaters 51, 52 may be moved in the direction opposite to the direction of arrow 57; only a relative movement is required. Then, heaters 51 and 52 are moved away from each other in the direction of arrows 59, and preferably the cleaning means are pivoted back in their original position (Fig. 6d), and finally the tapes 11 and 12 (or single folded tape) are moved in the direction of arrow 63, thus evacuating the debris 41.

The tape material preferably has high strength and good resistance to temperatures up to 220 °C. Further it preferably has a low coefficient of friction with respect to glass, preventing high clamping forces on the fiber after the stripping operation. Tape of non-woven materials may be used, such as lens cleaning tissue. Especially in case of perpendicular tape transport, the tape may have a width of about 25 mm which is about the stripping length. The tape may also have markers which are used to wind the tape over the right distance and indicate the end of the tape. The tape may be carried in a cartridge that can be wider than the tape to accommodate debris protruding from the tape.

Multifiber structures, such as for instance a ribbon fiber coating structure, can be stripped using the methods described in the patent application. The profiled blades can for instance be adapted to receive such a structure.

It is to be understood that this invention is not limited to the particular features of the means and/or the process steps of the methods described as such means and methods may vary. It is also to be understood that the terminology used herein is for purposes of describing particular embodiments only, and is not intended to be limiting. It must be noted that, as used in the specification and the appended claims, the singular forms "a" "an" and "the" include singular and/or plural referents unless the context clearly dictates otherwise. It is also to be understood that plural forms include singular and/or plural referents unless the context clearly dictates otherwise. It is moreover to be understood that, in case parameter ranges are given which are delimited by numeric values, the ranges are deemed to include these limitation values.

## Claims

1. Device (7) for removing a coating (6) from a coated optical fiber (5), the coated optical fiber having a cladding, a core and an axis, the cladding surrounding the core and the coating surrounding the cladding, the device comprising:
- means (1) for heating and clamping said coated optical fiber (5);
- protective means (3) for preventing said heating and clamping means (1) from contacting the coated optical fiber (5);
- driving means for driving said protective means (3; 11, 12) to cover the coated optical fiber, the protective means (3) adapted for being inserted between said coated optical fiber (5) and said heating and clamping means , the protective means (3) being further adapted to adhere to said coating (6); and
- moving means for performing a relative movement, in an axial or perpendicular direction of the optical fiber axis, of said protective means (3) and heating and clamping means (1).

2. Device according to claim 1, further comprising means for making an incision (4) in said coated optical fiber (5).

3. Device according to claim 2, whereby said means for making an incision (4) are retractable (14).

4. Device according to claim 2 or claim 3, whereby said means (4) for making an incision can be profiled and whereby said protective means (3) surrounds the optical fiber (5) when the protective means (3) is inserted between said coated optical fiber (5) and said profiled means (4) for making an incision.

5. Device according to any of claim 2 to 4, whereby said means (4) for making an incision is heated.

6. Device according to any of claim 1 to 5, further comprising means for cleaning a stripped portion of said optical fiber (5), whereby said cleaning means are preferably retractable.

7. Device according to any preceding claim further comprising a dispenser (8) for dispensing said protective means.

8. Device according to any one of claims 1 to 7 further comprising second means (11) for heating said coated optical fiber (5) while clamping said coated optical fiber (5) and second driving means (12) for driving second protective means to cover the coated optical fiber (5) and said second means for heating (11).

9. Device according to claim 8 wherein said protective means and said second protective means are both a tape; or wherein said protective means is a tape of a specific type and said second protective means is different from said protective means and is another tape of said specific type; or wherein said protective means is a first tape and said second protective means is a second tape, different from said first tape, and wherein said first tape is a sticky tape.

10. Device according to any one of the preceding claims adapted for automatically removing said coating from said coated optical fiber.

## Patentansprüche

1. Vorrichtung (7) zum Entfernen einer Beschichtung (6) von einer beschichteten optischen Faser (5), wobei die beschichtete optische Faser einen Mantel, einen Kern und eine Achse aufweist, der Mantel den Kern umhüllt und die Beschichtung den Mantel umhüllt, wobei die Vorrichtung Folgendes umfasst:
- Mittel (1) zum Erwärmen und Festklemmen der beschichteten optischen Faser (5);
- Schutzmittel (3), die verhindern, dass die Erwärmungs- und Klemmmittel (1) die beschichtete optische Faser (5) berühren;
- Antriebsmittel zum Antreiben der Schutzmittel (3; 11, 12) zum Abdecken der beschichteten optischen Faser, wobei die Schutzmittel (3) ausgelegt sind, um zwischen der beschichteten optischen Faser (5) und den Erwärmungs- und Klemmmitteln eingeführt zu werden, wobei die Schutzmittel (3) weiterhin dazu ausgelegt sind, an der Beschichtung (6) anzuhaften; und
- Bewegungsmittel zum Durchführen einer Relativbewegung der Schutzmittel (3) und der Erwärmungs- und Klemmmittel (1) in einer axialen oder senkrechten Richtung der Achse der optischen Faser.

2. Vorrichtung nach dem Anspruch 1, die weiterhin Mittel zum Vornehmen eines Einschnitts (4) in der beschichteten optischen Faser (5) umfasst.

3. Vorrichtung nach dem Anspruch 2, wobei die Mittel zum Vornehmen eines Einschnitts (4) einziehbar (14) sind.

4. Vorrichtung nach dem Anspruch 2 oder dem Anspruch 3, wobei die Mittel (4) zum Vornehmen eines Einschnitts ein Profil aufweisen können und wobei die Schutzmittel (3) die optische Faser (5) umgeben, wenn die Schutzmittel (3) zwischen der beschichteten optischen Faser (5) und den ein Profil aufweisenden Mitteln (4) zum Vornehmen eines Einschnitts eingeführt werden.

5. Vorrichtung nach einem beliebigen der Ansprüche 2 bis 4, wobei das Mittel (4) zum Vornehmen eines Einschnitts erwärmt wird.

6. Vorrichtung nach einem beliebigen der Ansprüche 1 bis 5, die weiterhin Mittel zum Reinigen eines abgemantelten Abschnitts der optischen Faser (5) umfasst, wobei die Reinigungsmittel vorzugsweise einziehbar sind.

7. Vorrichtung nach einem beliebigen der vorstehenden Ansprüche, die weiterhin einen Spender (8) zum Ausgeben der Schutzmittel umfasst.

8. Vorrichtung nach einem beliebigen der Ansprüche 1 bis 7, die weiterhin ein zweites Mittel (11) zum Erwärmen der beschichteten optischen Faser (5) während des Festklemmens der beschichteten optischen Faser (5) und ein zweites Antriebsmittel (12) zum Antreiben des zweiten Schutzmittels für das Abdecken der beschichteten optischen Faser (5) und des zweiten Erwärmungsmittels (11) umfasst.

9. Vorrichtung nach dem Anspruch 8, wobei sowohl das Schutzmittel und als auch das zweite Schutzmittel Bänder sind; oder wobei das Schutzmittel ein Band eines bestimmten Typs ist und sich das zweite Schutzmittel vom Schutzmittel unterscheidet und ein anderes Band des bestimmten Typs ist; oder wobei das Schutzmittel ein erstes Band ist und das zweite Schutzmittel ein sich vom ersten Band unterscheidendes zweites Band ist, und wobei das erste Band ein Klebeband ist.

10. Vorrichtung nach einem beliebigen der vorstehenden Ansprüche, die ausgelegt ist, um die Beschichtung automatisch von der beschichteten optischen Faser zu entfernen.

## Revendications

1. Dispositif (7) pour retirer un revêtement (6) d'une fibre optique revêtue (5), la fibre optique revêtue ayant une gaine, une âme et un axe, la gaine entourant l'âme et le revêtement entourant la gaine, le dispositif comprenant :
- un moyen (1) pour chauffer et serrer ladite fibre optique revêtue (5) ;
- un moyen de protection (3) pour empêcher ledit moyen (1) de chauffage et de serrage de venir en contact avec la fibre optique revêtue (5) ;
- un moyen d'entraînement pour contraindre ledit moyen de protection (3 ; 11, 12) à recouvrir la fibre optique revêtue, le moyen de protection (3) étant conçu pour être inséré entre ladite fibre optique revêtue (5) et ledit moyen de chauffage et de serrage, le moyen de protection (3) étant en outre conçu pour adhérer audit revêtement (6) ; et
- un moyen de déplacement pour effectuer un déplacement relatif, dans une direction axiale ou perpendiculaire à l'axe de fibre optique, dudit moyen de protection (3) et dudit moyen (1) de chauffage et de serrage.

2. Dispositif selon la revendication 1, comprenant en outre des moyens pour réaliser une incision (4) dans ladite fibre optique revêtue (5).

3. Dispositif selon la revendication 2, de telle sorte que lesdits moyens pour réaliser une incision (4) soient rétractables (14).

4. Dispositif selon la revendication 2 ou la revendication 3, de telle sorte que lesdits moyens (4) pour réaliser une incision puissent être profilés et de telle sorte que ledit moyen de protection (3) entoure la fibre optique (5) lorsque le moyen de protection (3) est inséré entre ladite fibre optique revêtue (5) et lesdits moyens (4) profilés pour réaliser une incision.

5. Dispositif selon l'une quelconque des revendications 2 à 4, de telle sorte que lesdits moyens (4) pour réaliser une incision soient chauffés.

6. Dispositif selon l'une quelconque des revendications 1 à 5, comprenant en outre des moyens pour nettoyer une partie dénudée de ladite fibre optique (5) de telle sorte que lesdits moyens de nettoyage soient, de préférence, rétractables.

7. Dispositif selon l'une quelconque des revendications précédentes, comprenant en outre un distributeur (8) pour distribuer ledit moyen de protection.

8. Dispositif selon l'une quelconque des revendications 1 à 7, comprenant en outre un second moyen (11) pour chauffer ladite fibre optique revêtue (5) tout en serrant ladite fibre optique revêtue (5) et un second moyen d'entraînement (12) pour contraindre un second moyen de protection à recouvrir la fibre optique revêtue (5) et ledit second moyen de chauffage (11).

9. Dispositif selon la revendication 8, dans lequel ledit moyen de protection et ledit second moyen de protection sont l'un et l'autre une bande ; ou dans lequel ledit moyen de protection est une bande d'un type spécifique et ledit second moyen de protection est différent dudit moyen de protection et est une autre bande dudit type spécifique ; ou dans lequel ledit moyen de protection est une première bande et ledit second moyen de protection est une seconde bande, différente de ladite première bande, et dans lequel ladite première bande est une bande adhésive.

10. Dispositif selon l'une quelconque des revendications précédentes, conçu pour retirer automatiquement ledit revêtement de ladite fibre optique revêtue.
